# EUROPEAN PATENT SPECIFICATION

(11) **EP 0 955 119 B1**
(45) Date of publication and mention of the grant of the patent: **22.12.2004**
(21) Application number: 99107406.3
(22) Date of filing: 26.04.1999
(51) Int. Cl.: B23D 59/02, B28D 1/04

(54) **Disk housing for electric cutter with water-cooled cutting disk**
Gehäuse für elektrisch angetriebenes, wassergekühltes Schneidblatt
Carter pour machine de coupe électrique à lame de coupe refroidie par eau

(30) Priority: 07.05.1998 IT BO980291
(43) Date of publication of application: 10.11.1999
(60) Divisional application: 04021782.0
(73) Proprietor: SKC di Tondini Claudio, I-48010 Cotignola, Ravenna (IT)
(72) Inventor: Tondini, Claudio, 48010 Cotignola (IT)
(74) Representative: Luppi, Luigi

(56) References cited:
- DE-A- 2 060 694
- FR-A- 1 242 791
- US-A- 2 876 810
- US-A- 3 568 377
- US-A- 4 414 783
- US-A- 4 676 557

## Description

The present invention relates to a disk housing for an electric cutter with water-cooled disk.

Cutting tables for tiles or the like above which a longitudinal horizontal guide is mounted are known as electric cutters; a carriage is mounted so that it can slide along the guide, and a motor assembly, which supports a cutting disk, is associated with said carriage so as to oscillate on a horizontal transverse axis.

Work with certain materials entails the use of disks whose cutting edge must be kept constantly clean and cool by means of a jet of water; accordingly, and also in order to reduce the danger of workplace accidents, the disk is protected by a housing which is usually rigidly fixed to the casing of the motor assembly.

Conventional disk housings for electric cutters with water-cooled disk blade entail some drawbacks due to the fact that since they are usually made of a plurality of metal parts mutually joined by means of screws and bolts, they entail a rather troublesome assembly and can be noisy in use; additionally, a wide gap usually remains between the edge of the disk housing and the disk, allowing water spray to pass; further, the outlets for the water are usually provided crudely and accordingly the cutting region and the disk blade are poorly wet and cannot operate in an optimum manner.

Another drawback is due to the fact that the disk housing is rigidly coupled to the frame of the motor and therefore when the motor is made to oscillate about a transverse axis which is parallel to the rotation axis in order to work in a different planned configuration, a rather wide angle of the blade is not protected by the disk housing.

US-A-4 414 783 discloses a coolant system for use with a cutter of the type having a vertically disposed rotatable cutter wheel for cutting metallurgical samples and other objects. Such a cutter has a motor-driven rotatable abrasive or metal cutting wheel or blade, and a workpiece holder which holds a specimen workpiece from which a section is to be sliced off. Either the cutter wheel or the workpiece holder is movable to bring the workpiece into engagement with the cutter wheel. The coolant system is combined with a blade guard which covers a major portion of the rotatable cutting blade for safety reasons, and the coolant system distributes a coolant fluid onto the centre of the vertically disposed rotating cutting blade on both sides thereof so as to bathe the workpiece over the entire cutting area.
The aim of the present invention is to obviate the above-mentioned drawbacks of conventional devices, by providing a disk housing for an electric cutter with a water-cooled disk cooling which is easy to assemble and not noisy in use, reduces outward water spray, and with which the disk blade is perfectly wet with water: the disk housing according to the invention is further capable of effectively protecting from the blade also when the motor assembly is rotated about a transverse axis.

Within the scope of this aim, an object of the present invention is to provide a structure which is simple, relatively easy to provide in practice, safe in use, effective in operation and relatively of low cost.

This aim, this object and others which will become apparent hereinafter are achieved by the present disk housing for an electric cutter with water-cooled disk, characterized in that it comprises a pair of symmetrical semicircular plates which are peripherally provided with holes for screws for fixing onto the two faces of a perimetric support which is provided with interlock coupling means for a water supply duct and for a nozzle for spraying water onto the disk.

Further characteristics and advantages of the present invention will become apparent from the following detailed description of a preferred but not exclusive embodiment of a disk housing for an electric cutter with water-cooled disk according to the invention, illustrated only by way of non-limitative example in the accompanying drawings, wherein:

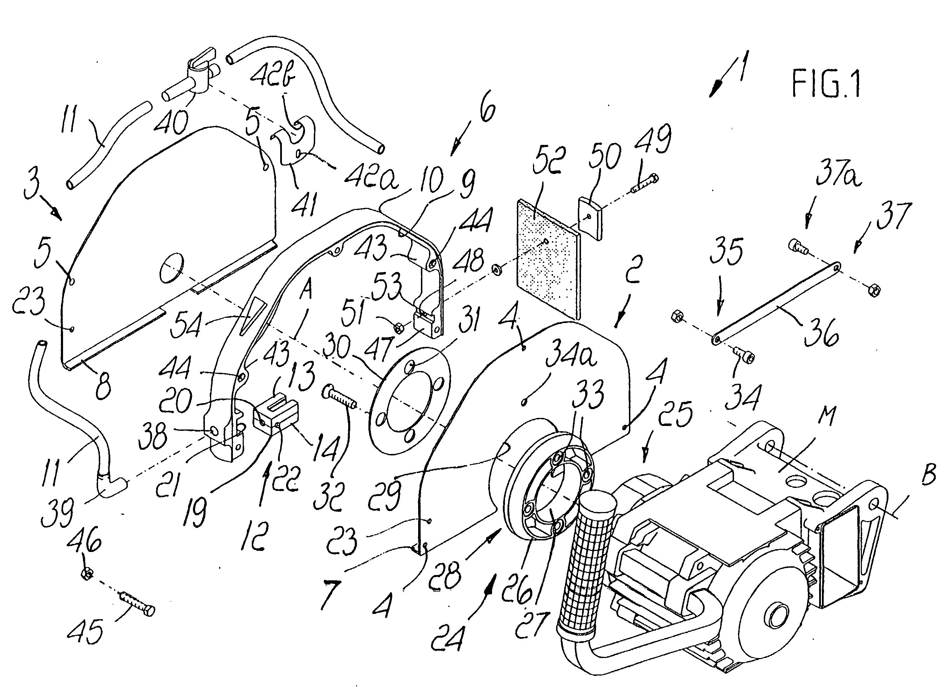

Figure 1 is an exploded perspective view of a disk housing for an electric cutter with water-cooled disk according to the invention;

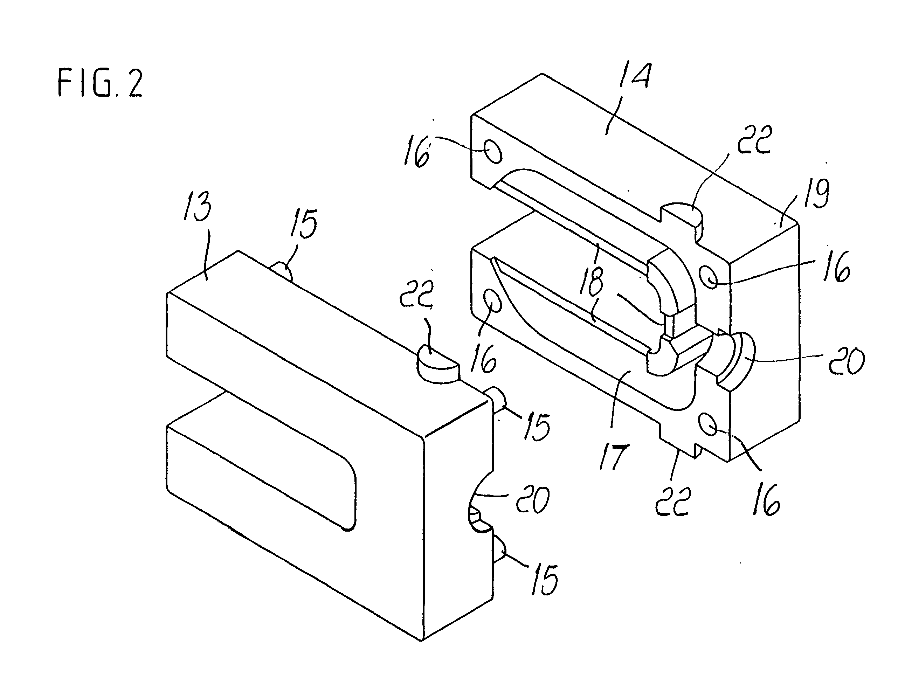

Figure 2 is an enlarged-scale exploded perspective view of the water spray nozzle of the disk housing;

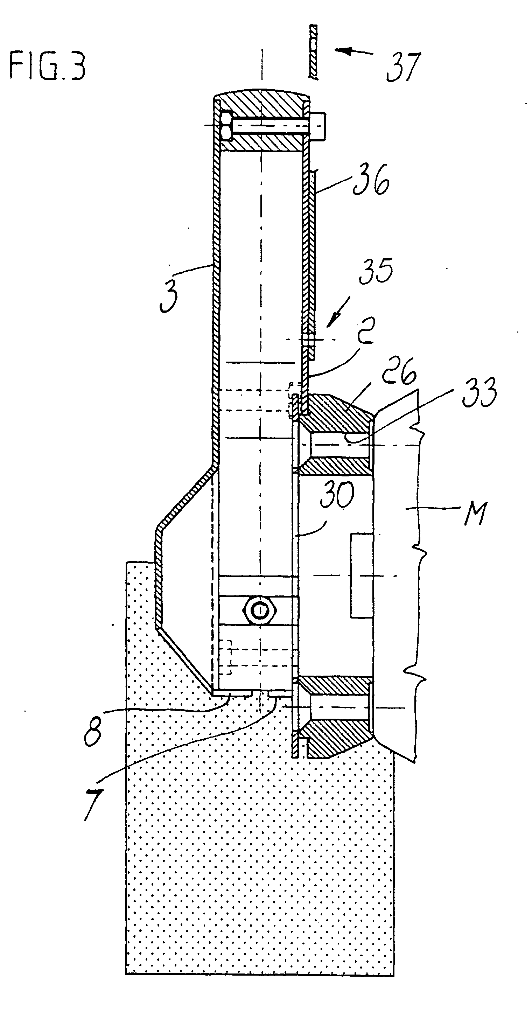

Figure 3 is a partially sectional front view of a disk housing according to the invention;

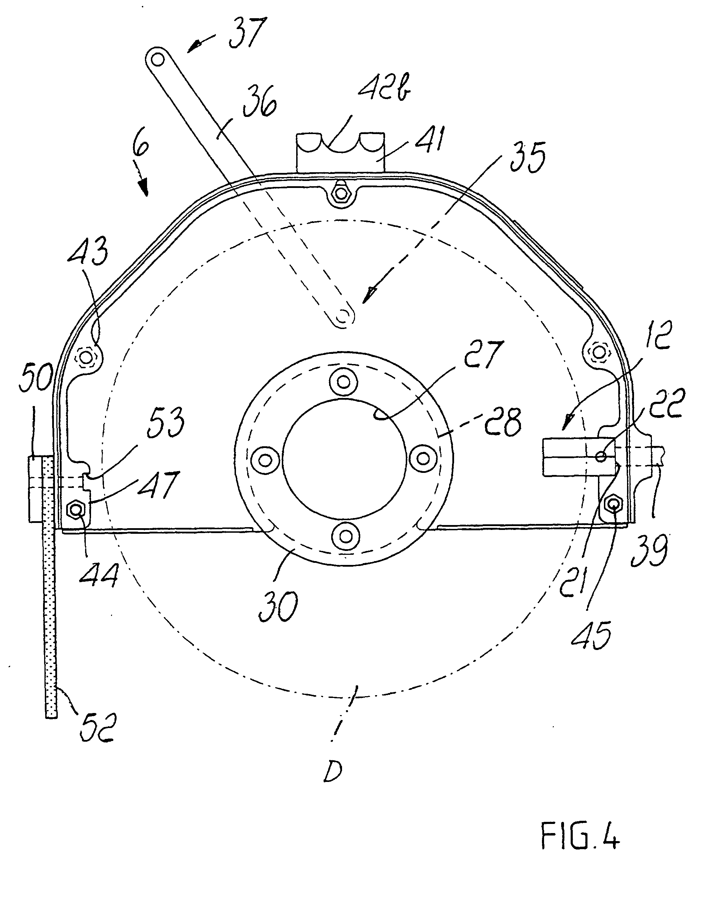

Figure 4 is a side view of a disk housing according to the invention, with one of the semicircular plates removed;

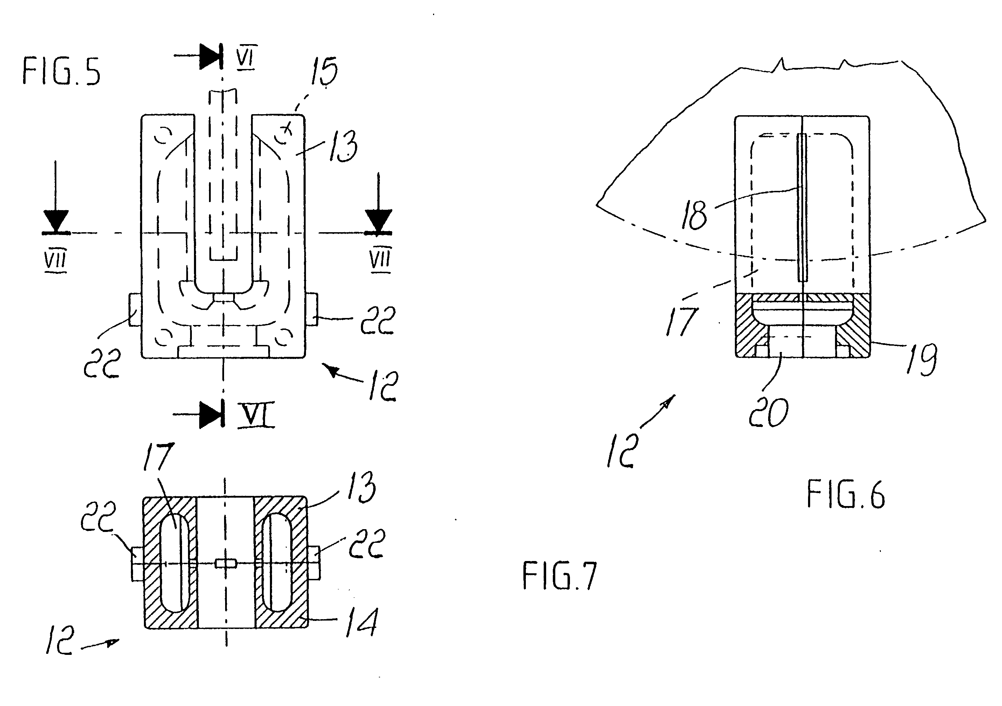

Figure 5 is a top view of the nozzle of Figure 2;
Figure 6 is a sectional side view of the nozzle, taken along the plane VI-VI of Figure 5;
Figure 7 is a sectional front view of the nozzle, taken along the plane VII-VII of Figure 5.

With particular reference to the above figures, the reference numeral 1 generally designates a disk housing for an electric cutter with water-cooled disk blade according to the invention.

The disk housing 1 comprises two symmetrical semicircular plates 2, 3 which are peripherally provided with holes in mutually different positions; the first semicircular plate has three holes 4, while the second semicircular plate has two holes 5; said holes are meant for screws for fixing to the two faces of a perimetric support 6, and the semicircular plates are arranged parallel to each other and form, together with the support, a sort of flat box.

The semicircular plates 2, 3 are substantially shaped like half of a regular polygon and have, at the diagonal from which the cutting disk blade D protrudes, respective edges 7 and 8 which are folded inward: the perimetric support 6, which is advantageously formed by molding materials such as the plastics known by the trade-name Nylon, has, on its two faces, respective external ridges 9 and 10 for the interlock coupling of the polygonal edges of the semicircular plates 2, 3.

The perimetric support 6 is provided with interlock coupling means for a water supply duct 11 and for a nozzle 12 for spraying water onto the disk blade.

The nozzle 12 is substantially fork-shaped in order to wrap around the disk and has water passage openings which are directed toward the inside of its prongs. The nozzle 12 is produced by molding materials such as the plastics known by the trade-name Nylon and is constituted by two symmetrical half-shells 13 and 14 which are fork-shaped and can be coupled together by interlocking through the insertion of corresponding pins 15 in corresponding holes 16; passage ducts 17 and water spray openings 18 are formed in the mutually contacting surfaces of the half-shells 13 and 14.

The means for coupling the nozzle to the support are of the type with a tenon 19 for the base of the nozzle, which is crossed by a central hole 20 for the passage of water, and with a mortise 21 formed in the support. In order to lock the nozzle there are provided two mutually opposite pins 22 which protrude from the nozzle, one half of said pins being formed in the half-shell 13 and the other half being formed in the half-shell 14, said pins fitting in corresponding holes 23 of the semicircular plates. It is noted that the nozzle wraps around the cutting edge of the disk blade and that water is sprayed from all sides by means of three spraying points directly toward said disk blade; it is also noted that the nozzle can be easily disassembled and can then be opened, since it is formed by two half-shells, in order to rapidly clean the water passage ducts and openings.

The semicircular plate 2 is provided with means 24 for hermetic rotary coupling to the head 25 of the motor M that drives the disk blade; the coupling means 24 comprise a flared spacer 26 which is centrally crossed by a hole 27 for the passage of the driving shaft. The spacer 26 has, on one face, an annular indent 28 which snugly and rotatably fits in an opening 29 of the semicircular plate 2. The reference numeral 30 designates an annular washer which is crossed by four holes 31 which are distributed in an annular pattern and in which corresponding screws 32 can be inserted. Such screws 32 pass through corresponding holes 33 of the spacer 26 and screw into respective threaded holes of the head 25 of the motor; the coupling means 24 allow the disk blade housing assembly to oscillate about the axis A of the shaft of the motor of the tile cutter.

An articulation pivot 34 for the end 35 of a metal arm 36 is screwed into a hole 34a of the semicircular plate 2; the other end 37 of the metal arm is meant to be articulated, by means of a pivot 37a, to the elements that support the disk blade driving motor, and such arm is meant to cause a coupling of the articulated-parallelogram type in order to turn the disk blade housing when the disk blade driving motor is made to oscillate in a known manner about an axis B in order to keep the disk blade covered in a safe configuration.

The support has, at the mortise for coupling the nozzle to the support and toward the outside, a through hole 38 for the hermetic coupling of a 90° coupling 39 for connection to the duct 11. The duct 11 is controlled by a cock 40, which is advantageously fitted to the disk housing 2 by means of a U-shaped element 41 which has a small hole 42a for fixing to one of the screws of the holes 4 and a wide opening 42b for the passage of the wings of the cock 40.

In the support 6, at the regions affected by the holes 4 and 5 of the semicircular plates, there are provided thicker regions 43 which are crossed by holes 44 for the screws 45 for fixing the semicircular plates; the preferably hexagonal heads of the screws 45 are recessed in corresponding hexagonal seats formed at one of the two ends of the holes 44, while a lock nut 46, preferably of the self-locking type, is screwed at the free ends of the screws, after positioning the respective semicircular plate.

On the opposite side of the support with respect to the one where the nozzle is fixed, the thicker region continues with a portion 47 crossed by a hole 48 which is arranged radially with respect to the half-disk and is meant to accommodate a screw 49 for fixing, by means of a reinforcement plate 50 and a nut 51, a spray guard flap 52 made of a spongy material suitable to absorb sprays. Advantageously, the portion 47 has a notch 53 for the rotation-preventing coupling of the hexagonal head of the screw 49 or rather of the corresponding nut 51.

Conveniently, on the exposed surface of the support 6 there is an arrow 54 which is formed in relief and indelibly indicates the direction of rotation of the cutting disk blade.

It has thus been shown that the invention achieves the intended aim and objects.

The invention thus conceived is susceptible of numerous modifications and variations within the scope of the invention defined by the claims.

In practice, the materials used, as well as the shapes and the dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A disk housing for an electric cutter with a water-cooled disk blade (D), comprising a water supply duct, a nozzle (12) for spraying water onto said disk blade (D), a perimetric support (6) which is provided with interlock coupling means for coupling said nozzle (12) to said perimetric support (6), **characterised in that** it further comprises a pair of plates (2, 3) which are peripherally provided with holes (4, 5) for screws for fixing said plates (2, 3) onto the two faces of said perimetric support (6) and **in that** said interlock coupling means comprises a receptacle (21) formed in said perimetric support (6) and so configured as to receive a base portion (19) of said nozzle (12).

2. A disk housing according to claim 1, wherein said interlock coupling means further comprises pins (22) protruding from said nozzle (12) and fitting in corresponding holes (23) obtained in said plates (2, 3).

3. A disk housing according to claim 1, or 2, wherein said plates (2, 3) are substantially shaped like half of a regular polygon and in that at the diagonal from which said disk blade (D) protrudes they have respective borders (7, 8) which fold inward.

4. A disk housing according any preceding claims, wherein said perimetric support (6) has, on its two faces, respective external ridges (9, 10) for the interlock coupling of perimetric edges of said plates.

5. A disk housing according to any preceding claims, wherein said nozzle (12) is substantially fork-shaped, in order to wrap around said disk blade (D), and has openings (18) for the passage of water which are directed toward the inside of prongs of said nozzle (12).

6. A disk housing according to any preceding claims, wherein one of said plates has means (24) for rotary hermetic coupling to the head of a motor (M) that drives said disk blade (D).

7. A disk housing according to any preceding claims, wherein one of said plates has an articulation pivot (34) for an end (35) of an arm (36) whose other end (37) is articulated to elements that support a motor (M) that drives said disk blade (D), said arm (36) being adapted to turn said disk housing (1) when said motor (M) is made to oscillate, in order to keep said disk blade (D) in a protective configuration.

8. The disk housing according to any preceding claims, wherein said nozzle (12) is constituted by two symmetrical fork-shaped half-shells (13, 14) which are mutually coupled by interlocking, passage ducts (17) and water spray openings (18) being formed in contacting surfaces thereof.

9. A disk housing according any preceding claims, wherein on the part of said perimetric support (6) that lies opposite to the part where said nozzle (16) is fixed there is a thicker portion (47) which is crossed by a hole (48) for a screw (49) for fixing a spray guard flap made of spongy material.

10. A disk housing according to any preceding claims, wherein on the exposed surface of said perimetric support (6) there is an arrow (54) in relief which is suitable to indicate the direction of rotation of said disk blade (D).

## Patentansprüche

1. Scheibengehäuse für eine elektrische Schneideinrichtung, die ein wassergekühltes Scheibenblatt (D) aufweist, mit einem Wasserzuführungskanal, einer Düse (12) zum Besprühen des Scheibenblatts (D) mit Wasser und mit einem Umfassungshalter (6), der mit ineinandergreifenden Kopplungsmitteln zum Koppeln der Düse (12) an den Umfassungshalter (6) versehen ist, **dadurch gekennzeichnet, dass** es des Weiteren ein Plattenpaar (2, 3) aufweist, die umfänglich mit Löchern (4, 5) für Schrauben zum Befestigen der Platten (2, 3) an den zwei Flächen des Umfassungshalters (6) versehen sind, und dass die ineinandergreifenden Kopplungsmittel eine Aufnahme (21) aufweisen, die in dem Umfassungshalter (6) ausgebildet und dazu konfiguriert ist, ein Basisteil (19) der Düse (12) aufzunehmen.

2. Scheibengehäuse nach Anspruch 1, wobei die ineinandergreifenden Kopplungsmittel des Weiteren Stifte (22) aufweisen, die aus der Düse (12) vorstehen und in entsprechende Löcher (23) passen, die in den Platten (2, 3) vorgesehen sind.

3. Scheibengehäuse nach Anspruch 1 oder 2, wobei die Platten (2, 3) im Wesentlichen wie die Hälfte eines regulären Vielecks gebildet sind, und wobei sie bei der Diagonalen, von der aus das Scheibenblatt (D) vorsteht, jeweils einen Rand (7, 8) aufweisen, der nach innen gefaltet ist.

4. Scheibengehäuse nach einem der vorhergehenden Ansprüche, wobei der Umfassungshalter (6) an seinen zwei Flächen jeweils einen externen Steg (9, 10) für das ineinandergreifende Koppeln der umlaufenden Ränder der Platten aufweist.

5. Scheibengehäuse nach einem der vorhergehenden Ansprüche, wobei die Düse (12) im Wesentlichen gabelförmig ausgebildet ist, um sich um das Scheibenblatt (D) herum zu winden, und Öffnungen (18) zum Durchlassen von Wasser aufweist, die in Richtung der Innenseite von Spitzen der Düse (12) gerichtet sind.

6. Scheibengehäuse nach einem der vorhergehenden Ansprüche, wobei eine der Platten Mittel (24) zum drehfesten Koppeln an den Kopf eines Motors (M) aufweist, der das Scheibenblatt (D) antreibt.

7. Scheibengehäuse nach einem der vorhergehenden Ansprüche, wobei eine der Platten eine Gelenkdrehachse (34) für ein Ende (35) eines Arms (36) aufweist, dessen anderes Ende (37) an Elementen angelenkt ist, die einen Motor (M) halten, der das Scheibenblatt (D) antreibt, wobei der Arm (36) angepasst ist, das Scheibengehäuse (1) zu drehen, wenn man den Motor (M) zum Oszillieren bringt, um das Scheibenblatt (D) in einer Schutzstellung zu halten.

8. Scheibengehäuse nach einem der vorhergehenden Ansprüche, wobei die Düse (12) durch zwei symmetrische gabelförmige Halbschalen (13, 14) gebildet ist, die gegenseitig ineinandergreifend gekoppelt sind, wobei Durchlasskanäle (17) und Wassersprühöffnungen (18) in sich berührenden Oberflächen davon ausgebildet sind.

9. Scheibengehäuse nach einem der vorhergehenden Ansprüche, wobei an dem Teil des Umfassungshalters (6), der dem Teil gegenüberliegt, an dem die Düse (12) befestigt ist, ein dickeres Teil (47) vorgesehen ist, das von einem Loch (48) für eine Schraube (49) zum Befestigen einer Sprühschutzklappe durchsetzt wird, die aus einem porösen Material hergestellt ist.

10. Scheibengehäuse nach einem der vorhergehenden Ansprüche, wobei an der freiliegenden Oberfläche des Umfassungshalters (6) ein Pfeil (54) reliefartig vorgesehen ist, der geeignet ist, die Drehrichtung des Scheibenblatts (D) anzuzeigen.

## Revendications

1. Carter de disque pour un outil de coupe électrique à lame circulaire (D) refroidie à l'eau, comprenant un conduit d'alimentation en eau, une buse (12) pour pulvériser de l'eau sur ladite lame circulaire (D), un support périmétrique (6) qui est équipé de moyens de couplage de verrouillage pour coupler ladite buse (12) audit support périmétrique (6), ***caractérisé en ce qu'**il* comprend en plus une paire de plaques (2, 3) qui sont munies sur la périphérie de trous (4, 5) pour des vis destinées à fixer lesdites plaques (2, 3) sur les deux faces dudit support périmétrique (6), et ***en ce que*** lesdits moyens de couplage de verrouillage comprennent un réceptacle (21) formé dans ledit support périmétrique (6) et configuré de manière à recevoir la portion de base (19) de ladite buse (12).

2. Carter de disque selon la revendication 1, dans lequel lesdits moyens de couplage de verrouillage comprennent en plus des goupilles (22) saillant de ladite buse (12) et s'insérant dans des orifices correspondants (23) ménagés dans lesdites plaques (2, 3).

3. Carter de disque selon la revendication 1 ou 2, dans lequel lesdites plaques (2, 3) sont essentiellement conformées comme une moitié de polygone régulier et dans lequel, à la diagonale de l'endroit où saille ladite lame circulaire (D), elles ont des bordures respectives (7, 8) qui sont rabattues vers l'intérieur.

4. Carter de disque selon l'une quelconque des revendications précédentes, dans lequel ledit support périmétrique (6) possède, sur ses deux faces, des nervures extérieures (9,10) destinées au couplage de verrouillage des bordures périmétriques desdites plaques.

5. Carter de disque selon l'une quelconque des revendications précédentes, dans lequel ladite buse (12) est substantiellement en forme de fourche de manière à s'envelopper autour de ladite lame circulaire (D), et possède des ouvertures (18) pour le passage de l'eau qui sont orientées vers l'intérieur de branches de ladite buse (12).

6. Carter de disque selon l'une quelconque des revendications précédentes, dans lequel l'une desdites plaques possède des moyens (24) pour un couplage rotatif hermétique à la tête d'un moteur (M) qui entraîne ladite lame circulaire (D).

7. Carter de disque selon l'une quelconque des revendications précédentes, dans lequel l'une desdites plaques possède un pivot d'articulation (34) pour une extrémité (35) d'un bras (36) dont l'autre extrémité (37) est articulée à des éléments qui supportent un moteur (M) qui entraîne ladite lame circulaire (D), ledit bras (36) étant apte à tourner ledit carter (1) de disque lorsque ledit moteur (M) vient à osciller, de manière à garder ladite lame circulaire (D) dans une configuration de protection.

8. Carter de disque selon l'une quelconque des revendications précédentes, dans lequel ladite buse (12) est constituée de deux demi-coques (13, 14) symétriques en forme de fourches qui sont mutuellement accouplées par verrouillage réciproque, des conduits (17) de passage et des ouvertures (18) de pulvérisation d'eau étant formés dans des surfaces en contact de celles-ci.

9. Carter de disque selon l'une quelconque des revendications précédentes, dans lequel sur la partie dudit support périmétrique (6) qui se trouve à l'opposé de la partie où ladite buse (16) est fixée, se trouve une portion plus épaisse (47) qui est traversée par un trou (48) pour une vis (49) destinée à fixer un rabat anti-aspersion fait d'un matériau spongieux.

10. Carter de disque selon l'une quelconque des revendications précédentes, dans lequel, sur la surface exposée dudit support périmétrique (6) se trouve une flèche (54) en relief qui sert à indiquer le sens de rotation de ladite lame circulaire (D).
